(19) Europäisches Patentamt / European Patent Office / Office européen des brevets

(11) **EP 4 093 983 B1**

(12) **FASCICULE DE BREVET EUROPEEN**

(45) Date de publication et mention de la délivrance du brevet:
**10.05.2023   Bulletin 2023/19**

(21) Numéro de dépôt: **21701140.2**

(22) Date de dépôt: **25.01.2021**

(51) Classification Internationale des Brevets (IPC):
***F16C 19/18*** *(2006.01)*

(52) Classification Coopérative des Brevets (CPC):
**F16C 19/185; F16C 19/186;** F16C 2326/02

(86) Numéro de dépôt international:
**PCT/EP2021/051627**

(87) Numéro de publication internationale:
**WO 2021/148675 (29.07.2021 Gazette 2021/30)**

(54) **ASSEMBLAGE DE ROUE DE VEHICULE AUTOMOBILE**

KRAFTFAHRZEUGRADANORDNUNG

MOTOR VEHICLE WHEEL ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2020   FR 2000720**

(43) Date de publication de la demande:
**30.11.2022   Bulletin 2022/48**

(73) Titulaire: **NTN-SNR ROULEMENTS**
**74000 Annecy (FR)**

(72) Inventeurs:
• **BAUDU, Alexandre**
**74000 Annecy (FR)**
• **POURROY-SOLARI, Vincent**
**74230 THONES (FR)**

(74) Mandataire: **Alatis**
**3 rue Paul Escudier**
**75009 Paris (FR)**

(56) Documents cités:
**DE-A1-102007 016 427**

EP 4 093 983 B1

## Description

## DOMAINE TECHNIQUE DE L'INVENTION

L'invention se rapporte à un assemblage de roue de véhicule automobile.

## ÉTAT DE LA TECHNIQUE ANTÉRIEURE

Un assemblage de roue motrice de véhicule automobile, connu par exemple du document DE 10 2007 016427 A1, une fois monté sur le véhicule, comporte généralement un sous-ensemble fixe destiné à être solidarisé à un élément de suspension du véhicule et comportant un premier chemin de roulement extérieur et un deuxième chemin de roulement extérieur définissant un axe de révolution; un sous-ensemble tournant, apte à tourner par rapport à l'organe fixe autour de l'axe de révolution, et comportant un moyeu de roue, un bol de transmission, un premier chemin de roulement intérieur situé en regard du premier chemin de roulement extérieur, un deuxième chemin de roulement intérieur situé en regard du deuxième chemin de roulement extérieur; et des corps roulants, formant une première rangée de corps roulants entre le premier chemin de roulement extérieur et le premier chemin de roulement intérieur et une deuxième rangée de corps roulants entre le deuxième chemin de roulement extérieur et le deuxième chemin de roulement intérieur. Le moyeu de roue présente une interface de fixation pour une jante de roue et un disque de frein. L'assemblage présente donc classiquement un empilage de fonctions techniques, disposées suivant l'axe de révolution depuis l'intérieur vers l'extérieur du véhicule : transmission du couple, solidarisation à la suspension du véhicule, guidage en rotation, freinage et roulage, ce qui nécessite un encombrement important en sens axial, c'est-à-dire transversal dans le référentiel du véhicule.

Il a été proposé dans le document FR 3 052 104 de fretter sur le bol de transmission une bague intérieure de roulement pour le deuxième chemin de roulement intérieur, ce qui permet de diminuer l'encombrement axial pour une distance donnée entre les deux rangées de corps roulants, tout en augmentant le diamètre primitif de la rangée de corps roulants située du côté intérieur du véhicule. Dans la mesure où la charge utile et la raideur en carrossage sont des fonctions croissantes de la distance entre les deux rangées de corps roulants et du diamètre primitif des rangées de corps roulants, cette architecture apporte une solution pour concilier un encombrement axial réduit et de bonnes performances en termes de charge utile et de raideur en carrossage.

Les groupes motopropulseurs électriques et hybrides des véhicules s'avèrent souvent plus encombrants que les groupes motopropulseurs thermiques dans le sens de la largeur du véhicule au niveau des roues motrices, ce qui conduit à un raccourcissement des arbres de transmission transversaux. Ce raccourcissement n'est pas souhaitable car il conduit à des angles plus importants dans les joints de transmissions. Dans ce contexte, toute mesure permettant d'augmenter, même faiblement, l'espace disponible pour les arbres de transmission transversaux, est souhaitable. Il existe donc un besoin accru de compacité des assemblages de roue motrice en sens axial, qui ne se fasse pas au détriment des performances, notamment au niveau de la charge utile et de la rigidité.

## EXPOSÉ DE L'INVENTION

L'invention vise à proposer un assemblage de roue motrice de véhicule automobile, qui allie compacité axiale, charge utile élevée et bon niveau de raideur en carrossage.

Pour ce faire est proposé, selon un premier aspect de l'invention, un assemblage de roue motrice de véhicule automobile, comportant :

- un sous-ensemble fixe comportant un premier chemin de roulement extérieur annulaire et un deuxième chemin de roulement extérieur annulaire centrés un axe de révolution commun;

- un sous-ensemble tournant, apte à tourner par rapport au sous-ensemble fixe autour de l'axe de révolution, et comportant un moyeu de roue comportant un flasque pourvu d'une interface de fixation d'une jante de roue ou d'un disque de frein, le flasque de fixation formant une face de montage de la jante de roue ou du disque de frein tournée axialement dans un sens de démontage de la jante de roue ou du disque de frein, le sens de démontage étant parallèle à l'axe de révolution, la face de montage étant tangentielle à un plan de référence de montage perpendiculaire à l'axe de révolution, un bol de transmission, et au moins une bague intérieure de roulement, la bague intérieure de roulement étant frettée sur une portée de frettage du moyeu de roue, la bague intérieure de roulement étant en appui contre le bol de transmission au niveau d'une interface de contact annulaire s'étendant au moins dans une direction radiale par rapport à l'axe de révolution, le sous-ensemble tournant comportant en outre un premier chemin de roulement intérieur situé en regard du premier chemin de roulement extérieur et un deuxième chemin de roulement intérieur situé en regard du deuxième chemin de roulement extérieur et formé sur la bague intérieure de roulement ; et

- des corps roulants, formant une première rangée de corps roulants aptes à rouler sur le premier chemin de roulement extérieur et le premier chemin de roulement intérieur et une deuxième rangée de corps roulants aptes à rouler sur le deuxième chemin de roulement extérieur et le deuxième chemin de roulement intérieur, un premier plan primitif contenant les centres des corps roulants de la première rangée de corps roulants étant situé à une distance L non nulle d'un deuxième plan primitif contenant les centres des corps roulants de la deuxième rangée de corps roulants, dans le sens de démontage, la première rangée de corps roulants et la deuxième rangée de corps roulants étant situées d'un même côté extérieur d'un plan de limite de l'assemblage de roue motrice tangent aux corps roulants de la deuxième rangée de corps roulants et perpendiculaire à l'axe de révolution ;

Selon l'invention, l'interface de contact annulaire entre la bague de roulement intérieure et la face annulaire d'appui du bol de transmission est positionnée au moins partiellement, et de préférence complètement, entre le premier plan primitif et le plan de limite et a un diamètre maximal de contact DA qui est supérieur au diamètre DF de la portée de frettage et inférieur à un diamètre de fond de chemin DI2 du deuxième chemin de roulement intérieur.

On entend ici par diamètre maximal de contact DA le plus grand diamètre constaté au contact effectif entre le bol de transmission et la bague intérieure de roulement, et mesuré dans un plan perpendiculaire à l'axe de révolution.

Suivant l'invention, on propose d'équiper l'assemblage d'une bague intérieure de roulement de géométrie spécifique, qui permet de positionner le deuxième chemin de roulement intérieur radialement à l'extérieur du premier chemin de roulement intérieur, et de loger une partie du bol de transmission, incluant la face annulaire d'appui, dans un évidement formé par la bague intérieure de roulement.

Les premiers chemins de roulement et la première rangée de corps roulants ont vocation, une fois l'assemblage intégré au véhicule, à être s plus éloignés d'un plan vertical médian longitudinal du véhicule que les deuxièmes chemins de roulement et la deuxième rangée de corps roulants.

De préférence, l'interface de contact annulaire entre la bague de roulement intérieure et la face annulaire d'appui du bol de transmission est positionnée au moins partiellement, et de préférence complètement, entre le premier plan primitif et le deuxième plan primitif

Le diamètre primitif de la première rangée de corps roulants est plus petit que le diamètre primitif de la deuxième rangée de corps roulants, et de préférence de façon significative, pour augmenter le volume disponible pour loger le bol de transmission. De préférence, le premier chemin de roulement extérieur a un diamètre de fond de chemin DE1 inférieur au diamètre de fond de chemin DI2 du deuxième chemin de roulement intérieur.

Les dimensions du premier roulement réalisé par le premier chemin de roulement intérieur, le premier chemin de roulement extérieur et la première rangée de corps roulants et celle du deuxième roulement formé par le deuxième chemin de roulement intérieur, le deuxième chemin de roulement extérieur et la deuxième rangée de corps roulants sont adaptées aux dimensions du bol de transmission. Ainsi, suivant un mode de réalisation, le bol de transmission présente une cavité comportant des pistes de roulement, les pistes de roulement ayant un diamètre de fond de piste DBO satisfaisant de préférence à une ou plusieurs des conditions suivantes :

- le diamètre de fond de piste DBO est supérieur à un diamètre de fond de chemin DI1 du premier chemin de roulement intérieur,

- le diamètre de fond de piste DBO est inférieur à un diamètre de fond de chemin du deuxième chemin de roulement intérieur ;

- le diamètre de fond de piste DBO est supérieur au diamètre maximal de contact DA.

L'une ou l'autre des deux rangées de corps roulants peut être constituée de rouleaux coniques ou cylindriques, ce qui convient particulièrement à des véhicules dont la charge utile est élevée.

Toutefois, suivant un mode de réalisation préféré visant à minimiser le couple résistant à la rotation du sous-ensemble tournant, notamment pour des véhicules légers (voitures ou utilitaires), les corps roulants sont des billes. De façon préférentielle, les billes formant la première rangée de corps roulants ont un diamètre de bille DC1 inférieur ou égal à un diamètre de billes DC2 des billes formant la deuxième rangée de corps roulants. L'augmentation du diamètre des billes de la deuxième rangée permet de réduire la distance entre les deux rangées de billes, ce qui limite la flexion dans la bague intérieure de roulement, et donc les risques de décollement entre les pièces du sous-ensemble tournant. Les chemins extérieurs de roulement sont de préférence enveloppants en direction axiale, au sens où ils présentent chacun un fond de chemin, situé dans une position axiale intermédiaire entre les extrémités axiales du chemin de roulement.

La bague de roulement est de préférence une pièce métallique massive, réalisée par exemple en acier. Le frettage de la bague de roulement sur le moyeu de roue nécessite une portée de frettage qui, pour optimiser la compacité axiale de l'assemblage, s'étend jusqu'à proximité du premier chemin de roulement intérieur. De préférence, la bague intérieure de roulement présente une face d'extrémité tournée axialement dans le sens de démontage, et située à une distance L1 d'un plan contenant les points de l'interface de contact annulaire entre la bague de roulement intérieure et la face annulaire d'appui du bol de transmission les plus éloignés de l'axe de révolution, la distance L1 étant inférieure à une fois et demie le diamètre de billes des billes de la première rangée de billes.

Suivant un mode de réalisation, le diamètre maximal de contact DA de l'interface de contact annulaire est inférieur à la somme de deux fois le diamètre DC1 des corps roulants de la première rangée de corps roulants et du diamètre DF de la portée de frettage.

En pratique, l'assemblage de roue motrice comporte en outre une noix de transmission et des corps roulants de transmission, les corps roulants de transmission étant guidés par des pistes de roulement formées dans une cavité du bol de transmission et sur la noix de transmission. Les corps roulants de transmission et le bol de transmission forment un joint de transmission, qui définit un plan primitif passant par les centres des corps roulants de transmission lorsque les axes de révolution de la noix de transmission et du bol de transmission sont alignés, le plan primitif étant de préférence perpendiculaire à l'axe de révolution défini par le sous-ensemble fixe. On peut également définir un diamètre primitif du cercle primitif sur lequel sont positionnés les centres des corps roulants de transmission lorsque les axes de révolution de la noix de transmission et du bol de transmission sont alignés.

De préférence, le diamètre maximal de contact DA de l'interface de contact annulaire est inférieur au diamètre primitif DPB du joint de transmission.

Pour favoriser la compacité axiale de l'assemblage, le plan primitif du joint de transmission est situé à une distance CA du plan de référence de montage, qui satisfait une ou plusieurs des conditions suivantes :

- la distance CA est inférieure à un diamètre primitif de la deuxième rangée de corps roulants ;

- la distance CA est inférieure à treize septièmes d'une distance axiale mesurée entre le plan de référence de montage et le deuxième plan primitif ;

- le rapport entre la distance CA d'une part, et la distance L entre le premier plan primitif et le deuxième plan primitif d'autre part, est inférieur à 4,75, de préférence inférieur à 4,6 ;

- le rapport entre d'une part la différence entre la distance CA et la distance L2 entre le plan de référence de montage et le deuxième plan primitif et, d'autre part, un diamètre primitif de la deuxième rangée de corps roulants est inférieur à 0,45.

Suivant un mode de réalisation, l'interface de contact annulaire est plane.

Suivant un autre mode de réalisation, l'interface de contact annulaire est évasée, de préférence tronconique, et, de préférence, présente un angle au sommet A satisfaisant à une ou plusieurs des conditions suivantes :

- l'angle au sommet A est compris entre 100° et 140° ;

- l'angle au sommet A est égal, à +/- 10° près à un angle au sommet B d'une face interne tronconique du bol de transmission, opposée à la face annulaire d'appui.

La position radiale de la face de montage a un impact sur la raideur de l'assemblage. Suivant un mode de réalisation, le rapport entre le diamètre maximal de contact DA de l'interface de contact annulaire et le diamètre primitif DP2 de la deuxième rangée de corps roulant inférieur à 0,65.

Suivant un mode de réalisation, le bol de transmission comporte une portion d'extrémité cannelée montée libre, ajustée ou frettée dans une portion tubulaire cannelée du moyeu de roue, formant une interface de contact cannelée, le sous-ensemble tournant comportant de préférence au moins un élément de maintien axial fixé au bol de transmission et venant directement ou indirectement en appui contre une surface de butée du moyeu de roue tourné axialement dans le sens de démontage. De préférence, l'interface de contact cannelée permet un démontage du moyeu de roue. L'élément de maintien axial peut notamment être constitué d'une tête d'une vis vissée dans un trou fileté formé dans le bol de transmission parallèlement à l'axe de révolution, ou d'un écrou vissé sur une portion filetée formée sur le bol transmission. Il peut également s'agir d'une déformation à froid d'une extrémité du bol de transmission ou du moyeu de roue, assurant une interférence axiale entre les deux pièces. De façon plus générale, la portion d'extrémité du bol de transmission peut avoir toute forme cylindrique à base non circulaire montée libre, ajustée ou frettée dans une portion tubulaire de forme complémentaire du moyeu de roue, formant une interface de contact à section non circulaire, le sous-ensemble tournant comportant de préférence au moins un élément de maintien axial fixé au bol de transmission et venant directement ou indirectement en appui contre une surface de butée du moyeu de roue tourné axialement dans le sens de démontage.

Pour un assemblage particulièrement compact et rigide, on prévoit une ou plusieurs des dispositions suivantes :

- l'interface de contact cannelée présente un diamètre primitif de cannelures DPC et l'interface de contact annulaire est située axialement à une distance LAB du plan de référence de montage PA, tels que la somme DPC+LAB est inférieure au diamètre primitif DP2 de la deuxième rangée de corps roulants ;

- une distance mesurée entre une extrémité de l'interface de contact cannelée axialement la plus proche de l'interface de contact annulaire et le plan de référence de montage est inférieure à quatre cinquièmes d'une longueur mesurée entre le plan de référence de montage et le deuxième plan primitif.

Suivant un mode de réalisation, le moyeu de roue comporte en outre une portée de centrage du disque de frein ou de la jante de roue, tournée radialement à l'opposé de l'axe de révolution et qui fait saillie axialement par rapport à la face de montage dans la direction de démontage. La portée de centrage peut par exemple être cylindrique, ou comporter deux portions cylindriques de diamètres différents, la portion la plus proche de la face de montage ayant de préférence un diamètre plus grand que la portion la plus éloignée, et ayant pour fonction le centrage du disque de frein. D'autres profils de la portée de centrage peuvent être envisagés. La portée de centrage peut également être discontinue, comporter des gorges annulaires ou des cannelures parallèles à l'axe de révolution.

La face de montage du flasque peut être plane ou comporter des stries, cannelures ou gorges, par exemple radiales, annulaires ou spirales.

Suivant un mode de réalisation, les corps roulants de la première rangée de corps roulants ont des points de contact avec le premier chemin de roulement intérieur et le premier chemin de roulement extérieur, qui sont situés sur un premier cône de contact ayant un premier sommet situé par rapport à la première rangée de corps roulants, à l'opposé de la deuxième rangée de corps roulants, et les corps roulants de la deuxième rangée de corps roulants ont des points de contact avec le deuxième chemin de roulement intérieur et le deuxième chemin de roulement extérieur, qui sont situés sur un deuxième cône de contact ayant un deuxième sommet situé par rapport à la deuxième rangée de corps roulants, à l'opposé de la première rangée de corps roulants.

En pratique, le sous-ensemble fixe peut comporter une bride de fixation s'étendant radialement vers l'extérieur par rapport au premier chemin de roulement extérieur et au deuxième chemin de roulement extérieur. La bride de fixation est destinée à la fixation du sous-ensemble fixe à un organe de suspension du véhicule. À cet effet, la bride de fixation est de préférence pourvue d'une interface de fixation, qui peut comporter des alésages pour des éléments de fixation à l'organe de suspension.

Suivant un mode de réalisation, le sous-ensemble fixe comporte une bague extérieure métallique massive monobloc formant le premier chemin de roulement extérieur et le deuxième chemin de roulement extérieur, et formant de préférence également la bride de fixation. Alternativement, on peut prévoir que l'un et/ou l'autre des chemins extérieurs de roulement soient réalisés dans une bague de roulement frettée dans un manchon formant la bride de fixation.

Suivant un mode de réalisation, le premier chemin de roulement intérieur est formé sur le moyeu de roue.

Alternativement, le premier chemin de roulement intérieur est formé sur une première bague intérieure de roulement frettée au moins partiellement sur le moyeu de roue et en appui axial contre un épaulement du moyeu de roue tourné axialement vers la deuxième rangée de corps roulants. La première bague intérieure de roulement comporte une première extrémité axiale tournée axialement à l'opposé du deuxième chemin de roulement intérieur. De préférence, la première bague intérieure de roulement est en appui axial contre un épaulement du moyeu de roue tourné axialement vers la deuxième rangée de corps roulants. Cet épaulement assure un maintien axial de la première bague intérieure de roulement.

De préférence, le moyeu de roue est une pièce métallique massive monobloc, ce qui concourt à une plus grande rigidité de l'assemblage. Alternativement, le moyeu peut être une pièce massive monobloc bi-matière, par exemple une combinaison acier/aluminium ou acier/matériau composite

De préférence, le bol de transmission est une pièce métallique massive monobloc.

Le cas échéant, le sous-ensemble tournant comporte en outre un disque de frein en appui sur la face de montage, une jante de roue en appui sur le disque de frein et des éléments de fixation de la jante de roue et du disque de frein au flasque de fixation.

## BRÈVE DESCRIPTION DES FIGURES

D'autres caractéristiques et avantages de l'invention ressortiront à la lecture de la description qui suit, en référence aux figures annexées.

[Fig. 1A] La figure 1A est une vue en coupe longitudinale d'un assemblage de roue motrice de véhicule automobile selon un premier mode de réalisation de l'invention.

[Fig. 1B] La figure 1B est identique à la figure 1A, mais on y a porté différentes dimensions caractéristiques de l'assemblage de roue.

[Fig. 2] La figure 2 est une vue en coupe longitudinale d'un assemblage de roue motrice de véhicule automobile selon un deuxième mode de réalisation de l'invention.

[Fig. 3] La figure 3 est une vue en coupe longitudinale d'un assemblage de roue motrice de véhicule automobile selon un troisième mode de réalisation de l'invention.

Pour plus de clarté, les éléments identiques ou similaires sont repérés par des signes de référence identiques sur l'ensemble des figures.

## DESCRIPTION DÉTAILLÉE DE MODES DE RÉALISATION

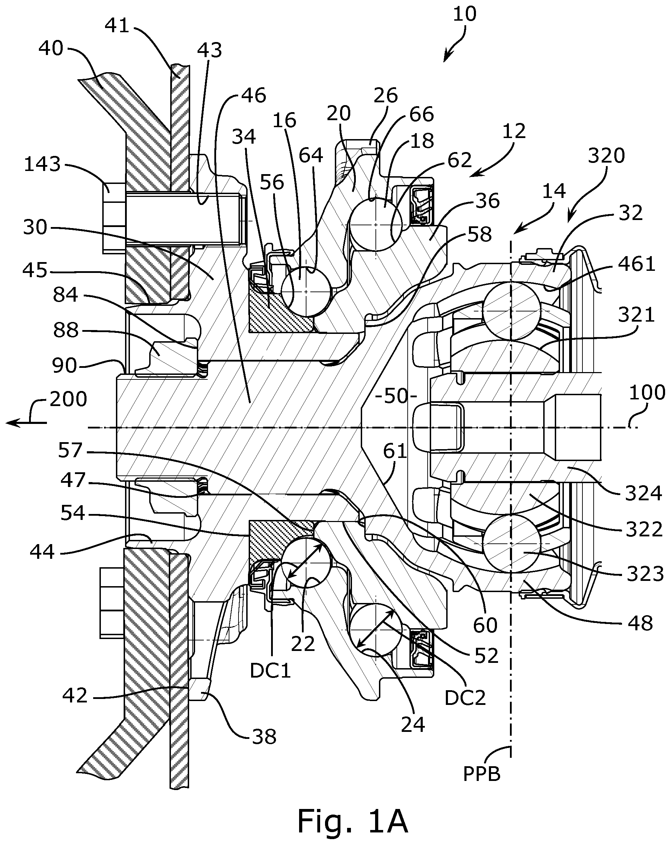

Sur la figure **1A** est illustré un assemblage de roue motrice de véhicule automobile **10,** comportant un sous-ensemble fixe **12,** destiné à être solidarisé à un organe de suspension d'un véhicule automobile (non représenté) et définissant un axe de révolution **100,** un sous-ensemble tournant **14,** apte à tourner autour de l'axe de révolution **100** à l'intérieur du sous-ensemble fixe **12,** et des corps roulants de guidage **16, 18** entre le sous-ensemble tournant **14** et le sous-ensemble fixe **12.**

Le sous-ensemble fixe **12** est ici constitué par une bague extérieure métallique massive monobloc **20** sur laquelle sont formés un premier chemin de roulement extérieur **22** et un deuxième chemin de roulement extérieur **24** coaxiaux définissant l'axe de révolution **100.** La bague extérieure comporte en outre au moins une bride de fixation **26** s'étendant radialement vers l'extérieur, dans laquelle sont formés des alésages (non illustrés sur cette figure) pour la fixation de la bride de fixation **26** à un organe de suspension, par l'intermédiaire d'éléments de fixation (non représentés).

Le sous-ensemble tournant **14** comporte un moyeu de roue **30,** un bol de transmission **32,** une première bague intérieure de roulement **34,** et une deuxième bague intérieure de roulement **36.**

Le moyeu de roue **30** est une pièce métallique massive monobloc, qui comporte un flasque **38** de fixation d'une jante de roue motrice **40** et d'un disque de frein **41.** Le flasque **38** présente une face **42** d'appui du disque de frein **41,** et est pourvu d'alésages de fixation **43,** permettant l'insertion d'éléments de fixation **143** de la jante **40** et du disque de frein **41.**

Le moyeu de roue **30** présente en outre une jupe **44** de centrage qui fait saillie axialement par rapport à la face plane d'appui **42,** dans un sens de démontage **200** de la jante de roue **40** et du disque de frein **41,** et présente une portée de centrage **45,** de préférence étagée, tournée radialement vers l'extérieur, comportant une première portion cylindrique de centrage de la jante de roue **40** et une deuxième portion cylindrique, de diamètre égal ou plus important, pour le centrage du disque de frein **41** lors du montage. La portée de centrage **45** n'a pas nécessairement vocation à rester en contact avec la jante **40** et le disque de frein **41** après montage.

Le bol de transmission **32** est une pièce métallique massive monobloc, qui présente une portion saillante d'extrémité **46** pleine et une portion médiane évasée **48** délimitant une cavité **50** de joint homocinétique.

Dans ce mode de réalisation, la cavité comporte des pistes de roulement **461** situées en regard de pistes de roulement **321** complémentaires formées sur une noix de joint de transmission **322,** pour guider des corps roulants **323** selon des trajectoires concaves, par exemple en arc de cercle, situées chacune dans un plan contenant l'axe de révolution **100.** De façon connue, cette ensemble forme un joint de transmission **320** qui permet la transmission d'un mouvement et d'un couple entre la noix **322,** solidaire d'un arbre de transmission **324,** et le bol de transmission **32** solidaire du moyeu de roue **30,** alors qu'en fonctionnement, l'arbre de transmission **324** ne reste pas parfaitement aligné avec l'axe de révolution **100** imposé par la bague extérieure **20,** étant rappelé que cette dernière est supportée par un élément de suspension assurant un ou plusieurs degrés de liberté de déplacement de la bague extérieure **20** par rapport à la caisse du véhicule.

La portion saillante **46** du bol de transmission **32** est cannelée et montée libre, ajustée ou frettée dans une cavité tubulaire cannelée **47** du moyeu de roue **30,** formant une interface de contact cannelée.

Par ailleurs, on a illustré avec sur la figure 1A des moyens de fixation du bol de transmission **32** et du moyeu de roue **30,** qui mettent en oeuvre un écrou **88** vissé à une extrémité filetée **90** de la portion saillante **46,** et en appui contre l'épaulement **84** du moyeu de roue **30.**

La première bague intérieure de roulement **34** est frettée sur une portée de frettage cylindrique **52** du moyeu de roue **30,** en appui axial contre un épaulement annulaire **54** formé sur le moyeu de roue **30.** Un premier chemin de roulement intérieur **56** est formé sur la première bague intérieure de roulement **34** en regard du premier chemin de roulement extérieur **22.**

La deuxième bague intérieure de roulement **36** est également frettée sur la portée de frettage cylindrique **52** du moyeu de roue **30,** avec une face transversale d'extrémité **57** en appui axial contre la première bague intérieure de roulement **34,** et présente une face transversale annulaire d'arrêt **58** tournée axialement à l'opposé du premier chemin de roulement intérieur **56,** et axialement en saillie par rapport au moyeu de roue **30,** de façon à venir en appui contre un épaulement **60** formé sur le bol de transmission **32.** Dans ce mode de réalisation, la face transversale annulaire d'arrêt **58** et l'épaulement **60** sont plans. Un deuxième chemin de roulement intérieur **62** est formé sur la deuxième bague intérieure de roulement **36** en regard du deuxième chemin de roulement extérieur **24.** Les corps roulants **16, 18** forment d'une part une première rangée de corps roulants **16** qui roulent sur le premier chemin de roulement extérieur **22** et le premier chemin de roulement intérieur **56,** et d'autre part une deuxième rangée de corps roulants **18** qui roulent sur le deuxième chemin de roulement extérieur **24** et le deuxième chemin de roulement intérieur **62.**

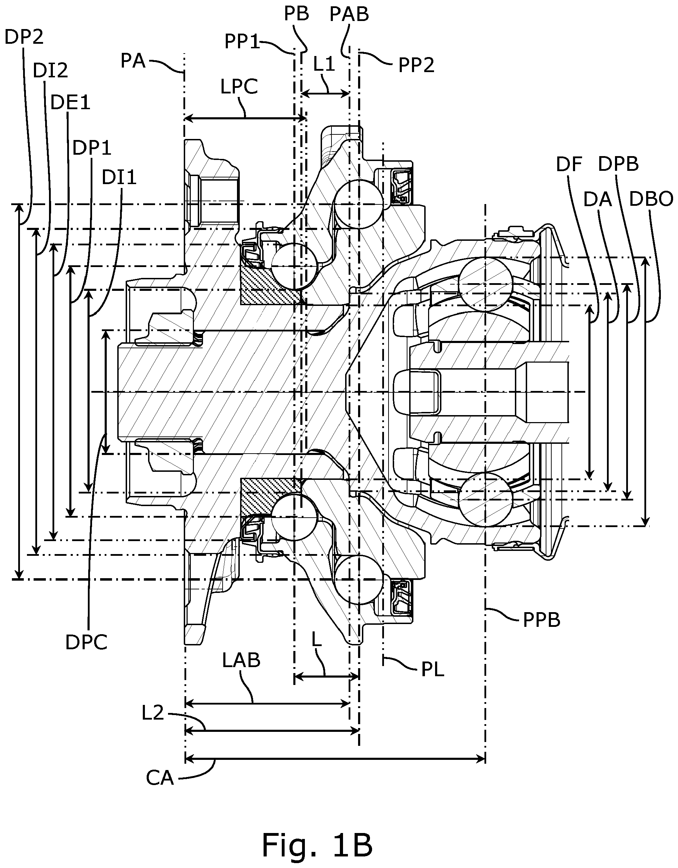

Pour la suite de l'exposé, on s'intéressera à certaines caractéristiques dimensionnelles remarquables de l'assemblage, illustrées sur la figure 1B, et qui nécessitent quelques définitions préalables. Ainsi, on notera :

- **PP1,** le plan primitif où se trouve le cercle primitif constituant la trajectoire des centres des corps roulants **16** de la première rangée de corps roulants ;

- **PP2,** le plan primitif où se trouve le cercle primitif constituant la trajectoire des centres des corps roulants **18** de la deuxième rangée de corps roulants ;

- **DP1,** le diamètre du cercle primitif de la première rangée de corps roulants **16** ;

- **DP2,** le diamètre du cercle primitif de la deuxième rangée de corps roulants **18** ;

- **DC1,** le diamètre des billes **16** constituant les corps roulants de la première rangée de corps roulants ;

- **DC2,** le diamètre des billes **18** constituant les corps roulants de la deuxième rangée de corps roulants ;

- **PA,** un plan perpendiculaire à l'axe de révolution **100** et tangent à la face de montage **42** ;

- **PB,** un plan perpendiculaire à l'axe de révolution **100**, et tangent à la face d'extrémité **57** axiale de la deuxième bague intérieure **36** tournée dans la direction de démontage **200** ;

- **PL,** un plan perpendiculaire à l'axe de révolution **100**, et tangent aux corps roulants **18** de la deuxième rangée de corps roulants, et d'un même côté duquel se trouvent les deux rangées de corps roulants **16, 18** ;

- **DA** le diamètre maximal de l'interface de contact, c'est-à-dire de la zone de contact effectif, entre la face transversale annulaire d'arrêt **58** formée sur la deuxième bague de roulement intérieure **36** et la face annulaire d'appui **60** du bol de transmission **38** ;

- **PAB,** le plan perpendiculaire à l'axe de révolution **100** et contenant les points de l'interface de contact entre la face transversale annulaire d'arrêt **58** formée sur la deuxième bague de roulement intérieure **36** et la face annulaire d'appui **60** du bol de transmission **38** les plus éloignés de l'axe de révolution (en d'autres termes, le plan dans lequel est tracé le cercle de rayon **DA)** ;

- **DBO,** le diamètre de fond de piste des pistes de roulement formées dans la cavité **50** du bol de transmission **32** ;

- **DPB,** le diamètre primitif du joint de transmission **320**, qui est le diamètre du cercle primitif contenant les centres des corps roulants **323** du joint de transmission **320** lorsque l'axe de l'arbre de transmission **324** et l'axe de révolution **100** sont alignés,

- **PPB,** le plan contenant le cercle primitif du joint de transmission **320**, perpendiculaire à l'axe de révolution **100** lorsque l'axe de l'arbre de transmission **324** et l'axe de révolution **100** sont alignés,

- **DI1** un diamètre de fond de chemin du premier chemin de roulement intérieur **56,** défini comme le plus petit diamètre du chemin de roulement **56** ;

- **DI2** un diamètre de fond de chemin du deuxième chemin de roulement intérieur **62,** défini comme le plus petit diamètre du chemin de roulement **62** ;

- **DE1** un diamètre de fond de chemin du premier chemin de roulement extérieur **22,** défini comme le plus grand diamètre du chemin de roulement extérieur **22** ;

- **DF,** le diamètre de la portée de frettage **52,** au niveau de la deuxième bague de roulement intérieure **36** ;

- **DPC,** le diamètre primitif de cannelure de l'interface de contact cannelée (c'est-à-dire de la zone de contact effectif) entre la portion saillante **46** du bol de transmission **32** et la portion tubulaire cannelée **47** du moyeu de roue **30** ;

- **LPC,** la distance, mesurée parallèlement à l'axe de révolution **100**, entre d'une part le plan de référence de montage PA et, d'autre part, une extrémité de l'interface de contact cannelée entre la portion saillante **46** du bol de transmission **32** et la portion tubulaire cannelée **47** du moyeu de roue **30** la plus proche de l'interface entre le bol de transmission **32** et la deuxième bague de roulement intérieure **36**.

Les chemins extérieurs de roulement **22, 24** formés sur la bague extérieure de roulement **20** sont enveloppants en direction axiale, au sens où ils présentent chacun un fond de chemin **64, 66**, situé dans une position intermédiaire entre les extrémités axiales du chemin de roulement correspondant **22, 24**. Les corps roulants **16, 18** sont ici des billes, et les chemins de roulement **22, 24, 56, 62** sont disposés de manière à constituer un roulement à deux rangées de billes à contact oblique du type dit en "O". En d'autres termes, les points de contact entre les corps roulants **16** de la première rangée et les chemins de roulement associés **22, 56** sont situés sur un premier cône de contact ayant un premier sommet situé, par rapport à la première rangée de corps roulants **16**, à l'opposé de la deuxième rangée de corps roulants **18**, alors que les points de contact entre les corps roulants de la deuxième rangée **18** et les chemins de roulement associés **24, 62** sont situés sur un deuxième cône de contact ayant un deuxième sommet situé, par rapport à la deuxième rangée de corps roulants **18**, à l'opposé de la première rangée de corps roulants **16**.

De façon remarquable, la face annulaire d'appui **60** pour un appui au moins axial du bol de transmission **32** sur la deuxième bague de roulement intérieure **36**, est positionnée axialement entre le plan primitif **PP1** de la première rangée de corps roulants **16** et le plan limite PL, et de préférence, entre le plan primitif **PP1** de la première rangée de corps roulants **16** et le plan primitif **PP2** de la deuxième rangée de corps roulants. La face annulaire d'appui **60** se trouve radialement entre la portée de frettage **52** du moyeu de roue **30** et le deuxième chemin de roulement intérieur **62**, et de préférence entre la portée de frettage **52** et le diamètre du fond de chemin du premier chemin extérieur **64**. En direction radiale, ceci se traduit par le fait que le diamètre **DA** est supérieur au diamètre de frettage **DF** et inférieur au diamètre de fond de chemin **DI2,** et de préférence inférieur au diamètre fond de chemin **DE1.**

Ce positionnement confère à l'assemblage **10** une grande compacité axiale et une excellente rigidité.

De préférence, le diamètre de fond de chemin **DE1** du premier chemin de roulement extérieur **22** est inférieur au diamètre de fond de chemin intérieur **DI2** du deuxième chemin de roulement intérieur **62.**

Le diamètre de fond de piste **DBO** des pistes de roulement **461** formées dans la cavité **50** du bol de transmission **32** satisfait aux conditions suivantes :

- le diamètre de fond de piste **DBO** est supérieur au diamètre de fond de chemin **DI1** du premier chemin de roulement intérieur **56,**

- le diamètre de fond de piste **DBO** est inférieur au diamètre de fond de chemin **DI2** du deuxième chemin de roulement intérieur **62** ;

- le diamètre de fond de piste **DBO** est supérieur au diamètre **DA** maximal de la face annulaire d'appui **60.**

Dans ce premier mode de réalisation, les corps roulants **16, 18** sont des billes, les billes formant la première rangée de corps roulants **16** ayant un diamètre **DC1** inférieur ou égal au diamètre **DC2** des billes formant la deuxième rangée de corps roulants **18.** Choisir un diamètre relativement faible pour la première rangée de billes **16** permet de conserver une épaisseur axiale suffisante de la deuxième bague de roulement intérieure **36** dans la région de frettage sur le moyeu de roue **30,** à proximité de la première rangée de corps roulants **16,** et de rapprocher l'un de l'autre les plans primitifs **PP1** et **PP2.** Le choix d'un diamètre plus important pour la deuxième rangée de corps roulants **18** permet d'assurer une bonne tenue à la charge, tout en conservant une distance relativement faible entre les deux plans primitifs **PP1** et **PP2.**

Le plan **PB** d'extrémité axiale de la deuxième bague intérieure de roulement **36** est situé à une distance **L1** du plan **PAB** qui est inférieure à une fois et demie le diamètre de billes **DC1** des billes de la première rangée de corps roulants **16** :

$$\frac{L1}{DC1} < \frac{3}{2}$$

Le plan primitif **PPB** est situé à une distance **CA** du plan **PA,** qui satisfait une ou plusieurs des conditions suivantes :

- la distance **CA** est inférieure au diamètre primitif **DP2** de la deuxième rangée de corps roulants **18** ;

- la distance **CA** est inférieure à treize septièmes de la distance axiale **L2** mesurée entre le plan tangent **PA** et le plan primitif **PP2** de la deuxième rangée de corps roulants **18** ;

- le rapport entre la distance **CA** et la distance **L** entre le premier plan primitif **PP1** et le deuxième plan primitif **PP2** est inférieur à **4,75,** de préférence inférieur à **4,6** ;

- le rapport entre d'une part la différence entre la distance **CA** et la distance **L2** entre le plan **PA** et le deuxième plan primitif **PP2** et, d'autre part, le diamètre primitif PD2 de la deuxième rangée de corps roulants **18** est inférieur à **0,45** :

$$\frac{CA - L2}{PD2} < \frac{9}{20}$$

Le diamètre maximal de contact **DA** satisfait à une ou plusieurs des conditions suivantes :

- le rapport entre le diamètre **DA** et le diamètre primitif **DP2** de la deuxième rangée de corps roulant **18** inférieur à 0,65 :

$$\frac{DA}{DP2} < \frac{13}{20}$$

- le diamètre **DA** est inférieur à la somme du diamètre **DF** de la portée de frettage **52** et du diamètre **DC1** des corps roulants **16** de la première rangée de corps roulants :

$$DA < (DF + DC1)$$

Le diamètre primitif **DP2** de la deuxième rangée de corps roulants **18** est supérieur à la somme du diamètre primitif de cannelures **DPC** et de la distance **LAB** entre le plan **PA** et le plan **PAB** :

$$DPC + LAB < DP2$$

La distance **LPC** mesurée entre une extrémité de l'interface de contact cannelée axialement la plus proche de l'interface de contact annulaire du plan PAB et le plan de référence de montage (PA) est inférieure à 4/5<sup>ème</sup> de la distance **L2** entre le plan **PA** et le plan primitif **PP2** de la deuxième rangée de corps roulants **18** :

$$\frac{LPC}{L2} < \frac{4}{5}$$

En pratique, le diamètre **DA** est inférieur au diamètre primitif **DPB** du joint de transmission.

En variante de ce premier mode de réalisation, le premier chemin de roulement **56** peut être formé directement sur le moyeu de roue **30**.

En autre variante, les billes **16, 18** des deux rangées de billes peuvent avoir le même diamètre.

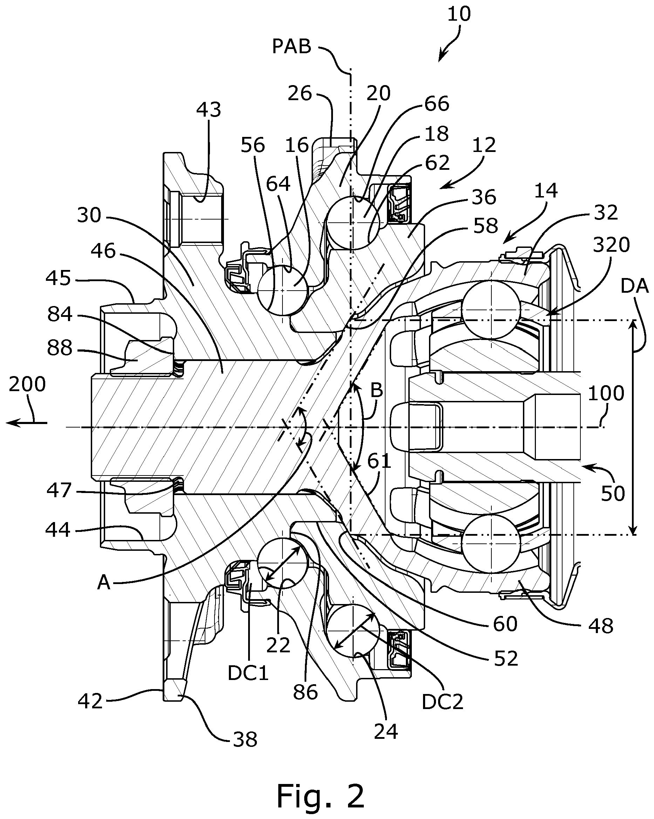

Le mode de réalisation de la figure **2** diffère de celui des figures **1A** et **1B** en premier lieu par le fait que le premier chemin de roulement intérieur **56** est formé directement sur le moyeu de roue **30**. Le deuxième chemin de roulement intérieur **62** est quant à lui formé sur une bague intérieure de roulement **36** que l'on continuera par commodité à nommer « deuxième » bague intérieure de roulement. Cette deuxième bague intérieure de roulement **36** est frettée sur la portée de frettage **52** et axialement en appui contre un épaulement **86** du moyeu de roue **30**, et contre l'épaulement **60** du bol de transmission **32**. Ce mode de réalisation diffère de celui des figures **1A** et **1B** en second lieu par la forme évasée, ici tronconique, de la face annulaire d'arrêt **58** et de la face annulaire d'appui **60**. On notera en particulier le positionnement du plan **PAB** et la cote **DA** sur la figure **2**, qui correspondent au plus grand cercle de la zone de contact entre la face annulaire d'arrêt **58** et de la face annulaire d'appui **60**. L'angle au sommet **A** de la face annulaire d'appui **60** et de la face annulaire d'arrêt **58** est de préférence compris entre 100° et 140°. L'angle au sommet **A** est par ailleurs de préférence égal, à +/- 10° près, à un angle au sommet **B** d'une face interne tronconique **61** du bol de transmission **32**, opposée à la face annulaire d'appui **60**.

Les caractéristiques dimensionnelles présentées pour le premier mode de réalisation sont également présentes dans le deuxième mode de réalisation. En particulier, l'interface de contact réalisé entre la face annulaire d'appui **60** et la face annulaire d'arrêt **58** est positionnée axialement entre le plan primitif **PP1** de la première rangée de corps roulants **16** et le plan limite **PL,** et de préférence, entre les plans primitifs **PP1 PP2** des deux rangées de corps roulants **16, 18,** et radialement entre la portée de frettage **52** du moyeu de roue **30** et le deuxième chemin de roulement intérieur **62.** , et de préférence entre la portée de frettage **52** et le plan transversal contenant le diamètre du fond de chemin du premier chemin de roulement extérieur **64.**

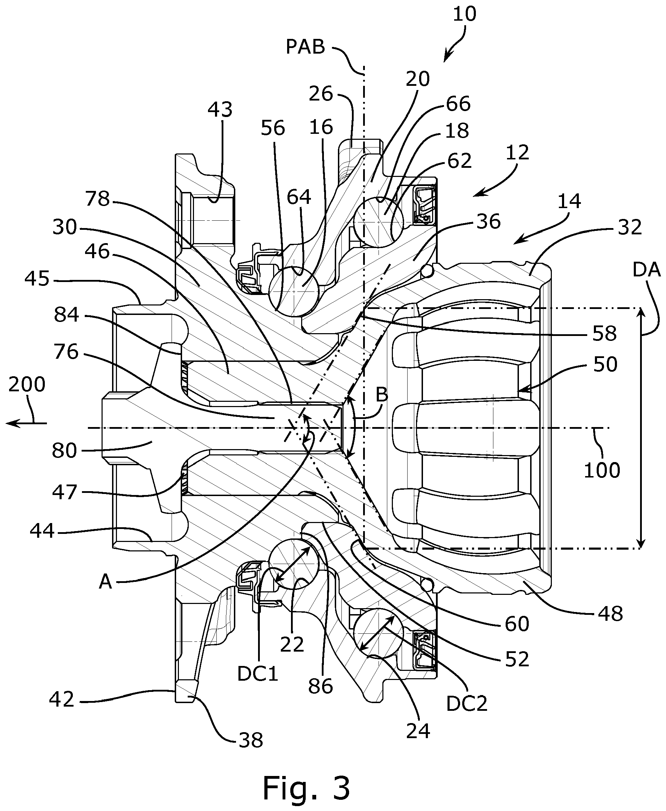

Le mode de réalisation de la figure **3** est une variante du mode de réalisation de la figure **2**, dans laquelle les diamètres des billes des deux rangées de corps roulants **16, 18** sont égaux. On constate alors une compacité axiale légèrement moins performante que dans le deuxième mode de réalisation, mais une simplification lors du montage du roulement, le risque d'erreur dans le choix des billes étant écarté.

On a par ailleurs illustré sur la figure **3** des moyens de sécurisation de la liaison entre le moyeu de roue **30** et le bol de transmission **32,** qui mettent en oeuvre une vis **76** engagée dans un trou fileté **78** de la portion saillante **46** du bol de transmission **32**, et dont la tête **80** vient en appui contre un épaulement **84** du moyeu de roue tourné à l'opposé du bol de transmission **32.** Ces moyens de sécurisation sont transposables à tous les modes de réalisation.

Naturellement, les exemples représentés sur les figures et discutés cidessus ne sont donnés qu'à titre illustratif et non limitatif.

En variante, il est possible de prévoir un sousensemble fixe en plusieurs pièces, avec une bride **26** en une ou plusieurs pièces formant la bride de fixation à un élément de suspension du véhicule, et deux bagues extérieures de roulement coaxiales frettées dans cette bride.

Les corps roulants **16, 18** de l'une ou l'autre des deux rangées peuvent être constitués par des rouleaux ayant un axe de symétrie de révolution, le centre de chaque corps roulant étant défini comme le centre de gravité du corps roulant, et le diamètre du corps roulant comme le diamètre mesuré dans un plan perpendiculaire à l'axe de symétrie de révolution du corps roulant et passant par le centre de gravité du corps roulant.

Il est explicitement prévu que l'on puisse combiner entre eux les différents modes de réalisation illustrés pour en proposer d'autres. Par exemple, les modes de fixation entre le bol de transmission **32** et le moyeu de roue **30** illustrés sur les figures **1** et **2** peuvent indifféremment être appliqués à tous les modes de réalisations pour roues motrices. Plus généralement, la fixation du moyeu de roue **30** sur le bol de transmission **32** peut être faite par tout moyen approprié, notamment par le procédé décrit dans la demande FR 3 003 201. On peut également prévoir des cannelures préusinées sur la paroi de la cavité tubulaire **47** du moyeu de roue **30** et sur la partie correspondante de la portion saillante **46** du bol de transmission **32.**

Le joint de transmission **320** a été illustré comme un joint homocinétique de type Rzeppa commandé par les pistes de roulement **461, 321,** mais d'autres variantes de joints homocinétiques sont possibles, par exemple des joints Rzeppa commandés par la cage du joint, ou des joints à pistes croisées. Ainsi, les pistes de roulement **461, 321** ne sont pas nécessairement circulaires, ni même nécessairement concaves, des pistes rectilignes étant également envisageables.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, dans le cadre de l'invention telle que définies par les revendications ci-jointes.

Dans l'ensemble du texte de la présente demande, on a appelé sous-ensemble fixe un sous-ensemble qui constitue un référentiel fixe pour la rotation du sous-ensemble mobile. L'homme du métier aura compris que ce sous-ensemble est luimême appelé à bouger par rapport à la caisse du véhicule, en fonction de la géométrie de suspension interposée entre la caisse du véhicule et le sous-ensemble fixe.

## Revendications

1.  Assemblage de roue motrice (10) de véhicule automobile, comportant :

    - un sous-ensemble fixe (12) comportant un premier chemin de roulement extérieur annulaire (22) et un deuxième chemin de roulement extérieur annulaire (24) centrés un axe de révolution (100) commun;
    - un sous-ensemble tournant (14), apte à tourner par rapport au sous-ensemble fixe (12) autour de l'axe de révolution (100), et comportant un moyeu de roue (30) comportant un flasque (38) pourvu d'une interface de fixation d'une jante de roue (40) ou d'un disque de frein (41), le flasque de fixation (38) formant une face (42) de montage de la jante de roue (40) ou du disque de frein (41) tournée axialement dans un sens de démontage (200) de la jante de roue (40) ou du disque de frein (41), le sens de démontage (200) étant parallèle à l'axe de révolution (100), la face de montage (42) étant tangentielle à un plan de référence de montage (PA) perpendiculaire à l'axe de révolution (100), un bol de transmission (32), et au moins une bague intérieure de roulement (36), la bague intérieure de roulement (36) étant frettée sur une portée de frettage (52) du moyeu de roue, la bague intérieure de roulement (36) étant en appui contre le bol de transmission (32) au niveau d'une interface de contact annulaire (58, 60) s'étendant au moins dans une direction radiale par rapport à l'axe de révolution (100), le sous-ensemble tournant (14) comportant en outre un premier chemin de roulement intérieur (56) situé en regard du premier chemin de roulement extérieur (22) et un deuxième chemin de roulement intérieur (62) situé en regard du deuxième chemin de roulement extérieur (24) et formé sur la bague intérieure de roulement (36) ; et
    - des corps roulants (16, 18), formant une première rangée de corps roulants (16) aptes à rouler sur le premier chemin de roulement extérieur (22) et le premier chemin de roulement intérieur (56) et une deuxième rangée de corps roulants (18) aptes à rouler sur le deuxième chemin de roulement extérieur (24) et le deuxième chemin de roulement intérieur (62), un premier plan primitif (PP1) contenant les centres des corps roulants (16) de la première rangée de corps roulants étant situé à une distance L non nulle d'un deuxième plan primitif (PP2) contenant les centres des corps roulants (18) de la deuxième rangée de corps roulants, dans le sens de démontage (200), la première rangée de corps roulants (16) et la deuxième rangée de corps roulants (18) étant situées d'un même côté extérieur d'un plan de limite (PL) de l'assemblage de roue motrice (10) tangent aux corps roulants (18) de la deuxième rangée de corps roulants (18) et perpendiculaire à l'axe de révolution (100) ;

    **caractérisé en ce que** l'interface de contact annulaire (58, 60) entre la bague de roulement intérieure (36) et la face annulaire d'appui (60) du bol de transmission (32) est positionnée au moins partiellement, et de préférence complètement, entre le premier plan primitif (PP1) et le plan de limite (PL) et a un diamètre maximal de contact DA qui est supérieur au diamètre DF de la portée de frettage et inférieur à un diamètre de fond de chemin DI2 du deuxième chemin de roulement intérieur (62).

2.  Assemblage de roue motrice (10) selon la revendication 1, **caractérisé en ce que** l'interface de contact annulaire (58, 60) entre la bague de roulement intérieure (36) et la face annulaire d'appui (60) du bol de transmission (32) est positionnée au moins partiellement, et de préférence complètement, entre le premier plan primitif (PP1) et le deuxième plan primitif (PP2).

3.  Assemblage de roue motrice (10) selon l'une quelconque des revendications précédentes, **caractérisé en ce que** le premier chemin de roulement extérieur (22) a un diamètre de fond de chemin DE1 inférieur au diamètre de fond de chemin DI2 du deuxième chemin de roulement intérieur (62).

4.  Assemblage de roue motrice (10) selon l'une quelconque des revendications précédentes, **caractérisé en ce que** le bol de transmission (32) présente une cavité (50) comportant des pistes de roulement (461), les pistes de roulement (461) ayant un diamètre de fond de piste DBO satisfaisant de préférence à une ou plusieurs des conditions suivantes :

    - le diamètre de fond de piste DBO est supérieur à un diamètre de fond de chemin DI1 du premier chemin de roulement intérieur (56),
    - le diamètre de fond de piste DBO est inférieur au diamètre de fond de chemin DI2 du deuxième chemin de roulement intérieur (62) ;
    - le diamètre de fond de piste DBO est supérieur au diamètre maximal de contact DA.

5.  Assemblage de roue motrice (10) selon l'une quelconque des revendications précédentes, **caractérisé en ce que** les corps roulants (16, 18) sont des billes, les billes formant la première rangée de corps roulants (16) ayant un diamètre de bille DC1 inférieur ou égal à un diamètre de billes DC2 des billes formant la deuxième rangée de corps roulants (18).

6. Assemblage de roue motrice (10) selon la revendication 5, **caractérisé ce que** la bague intérieure de roulement (36) présente une face d'extrémité (57) tournée axialement dans le sens de démontage (200), et située à une distance L1 d'un plan (PAB) contenant les points de l'interface de contact annulaire (58, 60) les plus éloignés de l'axe de révolution, la distance L1 étant inférieure à une fois et demie le diamètre de billes DC1 des billes (16) de la première rangée de billes.

7. Assemblage de roue motrice (10) selon l'une quelconque des revendications 5 à 6, **caractérisé en ce que** le diamètre maximal de contact DA de l'interface de contact annulaire (58, 60) est inférieur à la somme de deux fois le diamètre DC1 des corps roulants (16) de la première rangée de corps roulants et du diamètre DF de la portée de frettage (52).

8. Assemblage de roue motrice (10) selon l'une quelconque des revendications précédentes, **caractérisé en ce qu'**il comporte en outre une noix de transmission (322) et des corps roulants de transmission (323), les corps roulants de transmission (323) étant guidés par des pistes de roulement (461, 321) formées dans une cavité (50) du bol de transmission (32) et sur la noix de transmission (322), la noix de transmission (322), les corps roulants de transmission (323) et le bol de transmission (32) formant un joint de transmission (320) définissant un plan primitif (PPB) et un diamètre primitif.

9. Assemblage de roue motrice selon la revendication 8, **caractérisé en ce que** le diamètre maximal de contact DA de l'interface de contact annulaire (58, 60) est inférieur au diamètre primitif DPB du joint de transmission.

10. Assemblage de roue motrice selon l'une quelconque des revendications 8 à 9, **caractérisé en ce que** le plan primitif (PPB) du joint de transmission (320) est situé à une distance CA du plan de référence de montage (PA), qui satisfait une ou plusieurs des conditions suivantes :

- la distance CA est inférieure à un diamètre primitif (DP2) de la deuxième rangée de corps roulants (18) ;
- la distance CA est inférieure à treize septièmes d'une distance axiale L2 mesurée entre le plan de référence de montage (PA) et le deuxième plan primitif (PP2) ;
- le rapport entre la distance CA d'une part, et la distance L entre le premier plan primitif (PP1) et le deuxième plan primitif (PP2) d'autre part, est inférieur à 4,75, de préférence inférieur à 4,6 ;
- le rapport entre d'une part la différence entre la distance CA et la distance L2 entre le plan de référence de montage (PA) et le deuxième plan primitif (PP2) et, d'autre part, le diamètre primitif DP2 de la deuxième rangée de corps roulants (18) est inférieur à 0,45.

11. Assemblage de roue motrice (10) selon l'une quelconque des revendications précédentes, **caractérisé en ce que** l'interface de contact annulaire (58, 60) est plane.

12. Assemblage de roue motrice (10) selon l'une quelconque des revendications précédentes, **caractérisé en ce que** l'interface de contact annulaire (58, 60) est évasée, de préférence tronconique, et, de préférence, présente un angle au sommet A satisfaisant à une ou plusieurs des conditions suivantes :

- l'angle au sommet A est compris entre 100° et 140° ;
- l'angle au sommet A est égal, à +/-10° près à un angle au sommet B d'une face interne tronconique (61) du bol de transmission (32), opposée à la face annulaire d'appui (60).

13. Assemblage de roue motrice (10) selon l'une quelconque des revendications précédentes, **caractérisé en ce que** le rapport entre le diamètre maximal de contact DA de l'interface de contact annulaire (58, 60) et le diamètre primitif DP2 de la deuxième rangée de corps roulant (18) inférieur à 0,65.

14. Assemblage de roue motrice (10) selon l'une quelconque des revendications précédentes, **caractérisé en ce que** le bol de transmission (32) comporte une portion d'extrémité cannelée (46) montée libre, ajustée, ou frettée dans une portion tubulaire cannelée (47) du moyeu de roue (30), formant une interface de contact cannelée, le sous-ensemble tournant (14) comportant de préférence au moins un élément de maintien axial (80, 88) fixé au bol de transmission (32) et venant directement ou indirectement en appui contre un une surface de butée (84) du moyeu de roue (30) tourné axialement dans le sens de démontage (200).

15. Assemblage de roue motrice (10) selon la revendication 14, **caractérisé en ce que** l'interface de contact cannelée présente un diamètre primitif de cannelures DPC et l'interface de contact annulaire (58, 60) est située axialement à une distance LAB du plan de référence de montage PA, tels que la somme DPC+LAB est inférieure au diamètre primitif DP2 de la deuxième rangée de corps roulants.

16. Assemblage de roue motrice (10) selon l'une quelconque des revendications 14 à 15, **caractérisé en ce qu'**une distance (LPC) mesurée entre une extrémité de l'interface de contact cannelée axialement la plus proche de l'interface de contact annulaire (58, 60) et le plan de référence de montage (PA) est inférieur à quatre cinquièmes d'une longueur L2 mesurée entre le plan de référence de montage (PA) et le deuxième plan primitif (PP2).

17. Assemblage de roue motrice (10) selon l'une quelconque des revendications précédentes, **caractérisé en ce que** le moyeu de roue (30) est une pièce métallique massive monobloc.

18. Assemblage de roue motrice (10) selon l'une quelconque des revendications précédentes, **caractérisé en ce que** le sous-ensemble tournant (14) comporte en outre un disque de frein (41) en appui sur la face de montage (42), une jante de roue (40) en appui sur le disque de frein (41) et des éléments de fixation (143) de la jante de roue (40) et du disque de frein (41) au flasque de fixation (38).


**Patentansprüche**

1. Kraftfahrzeugantriebsradanordnung (10), umfassend:

    - eine feste Unterbaugruppe (12), die eine erste ringförmiges äußere Laufbahn (22) und eine zweite ringförmige äußere Laufbahn (24) umfasst, die auf einer gemeinsamen Drehachse (100) zentriert sind;
    - eine rotierende Unterbaugruppe (14), die in der Lage ist, relativ zu der festen Unterbaugruppe (12) um die Drehachse (100) zu rotieren, und die eine Radnabe (30), die einen Flansch (38) umfasst, der mit einer Befestigungsschnittstelle einer Radfelge (40) oder einer Bremsscheibe (41) versehen ist, wobei der Befestigungsflansch (38) eine axial in einer Demontagerichtung (200) der Radfelge (40) oder der Bremsscheibe (41) ausgerichtete Montagefläche (42) der Radfelge (40) oder der Bremsscheibe (41) bildet, wobei die Demontagerichtung (200) parallel zu der Drehachse (100) ist, wobei die Montagefläche (42) tangential zu einer Montagereferenzebene (PA) senkrecht zu der Drehachse (100) ist, eine Getriebeschale (32) und mindestens einen inneren Laufring (36) umfasst, wobei der innere Laufring (36) auf einen Schrumpfsitz (52) der Radnabe aufgeschrumpft ist, wobei der innere Laufring (36) auf Höhe einer ringförmigen Kontaktschnittstelle (58, 60) an der Getriebeschale (32), die sich mindestens in einer radialen Richtung relativ zu der Drehachse (100) erstreckt, anliegt, wobei die rotierende Unterbaugruppe (14) ferner eine erste innere Laufbahn (56), die der ersten äußeren Laufbahn (22) zugewandt angeordnet ist, und eine zweite innere Laufbahn (62) umfasst, die der zweiten äußeren Laufbahn (24) zugewandt angeordnet ist, und auf dem inneren Laufring (36) gebildet ist; und
    - Laufkörper (16, 18), die eine erste Reihe von Laufkörpern (16), die in der Lage sind, auf der ersten äußeren Laufbahn (22) und der ersten inneren Laufbahn (56) zu laufen, und eine zweite Reihe von Laufkörpern (18) bilden, die in der Lage sind, auf dem zweiten äußeren Laufbahn (24) und dem zweiten inneren Laufbahn (62) zu laufen, wobei eine erste Grundebene (PP1), welche die Zentren der Laufkörper (16) der ersten Reihe von Laufkörpern enthält, in einem Abstand L ungleich null von einer zweiten Grundebene (PP2), welche die Zentren der Laufkörper (18) der zweiten Reihe von Laufkörpern enthält, in der Demontagerichtung (200) angeordnet ist, wobei die erste Reihe von Laufkörpern (16) und die zweite Reihe von Laufkörpern (18) auf der gleichen Außenseite einer Grenzebene (PL) der Antriebsradanordnung (10) angeordnet sind, welche tangential zu den Laufkörpern (18) der zweiten Reihe von Laufkörpern (18) und senkrecht zu der Drehachse (100) ist;
    **dadurch gekennzeichnet, dass** die ringförmige Kontaktschnittstelle (58, 60) zwischen dem inneren Laufring (36) und der ringförmigen Anlagefläche (60) der Getriebeschale (32) mindestens teilweise und vorzugsweise vollständig zwischen der ersten Grundebene (PP1) und der Grenzebene (PL) positioniert ist und einen maximalen Kontaktdurchmesser DA aufweist, der größer als der Durchmesser DF des Schrumpfsitzes und kleiner als ein Bahnbodendurchmesser DI2 des zweiten inneren Laufrings (62) ist.

2. Antriebsradanordnung (10) nach Anspruch 1, **dadurch gekennzeichnet, dass** die ringförmige Kontaktschnittstelle (58, 60) zwischen dem inneren Laufring (36) und der ringförmigen Anlagefläche (60) der Getriebeschale (32) mindestens teilweise und vorzugsweise vollständig zwischen der ersten Grundebene (PP1) und der zweiten Grundebene (PP2) positioniert ist.

3. Antriebsradanordnung (10) nach einem der vorstehenden Ansprüche, **dadurch gekennzeichnet, dass** die erste äußere Laufbahn (22) einen Bahnbodendurchmesser DE1 aufweist, der kleiner als der Bahnbodendurchmesser DI2 der zweiten Laufbahn (62) ist.

4. Antriebsradanordnung (10) nach einem der vorstehenden Ansprüche, **dadurch gekennzeichnet, dass** die Getriebeschale (32) einen Hohlraum (50) vorweist, der Laufwege (461) umfasst, wobei die Laufwege (461) vorzugsweise einen Bahnbodendurchmesser DBO aufweisen, der vorzugsweise eine oder mehrere der folgenden Bedingungen erfüllt:

   - der Bahnbodendurchmesser DBO ist größer als ein Bahnbodendurchmesser DI1 der ersten Laufbahn (56),
   - der Bahnbodendurchmesser DBO ist kleiner als ein Bahnbodendurchmesser DI2 der zweiten Laufbahn (62);
   - der Bahnbodendurchmesser DBO ist größer als der maximale Kontaktdurchmesser DA.

5. Antriebsradanordnung (10) nach einem der vorstehenden Ansprüche, **dadurch gekennzeichnet, dass** die Laufkörper (16, 18) Kugeln sind, wobei die Kugeln, welche die erste Reihe von Laufkörpern (16) bilden, einen Kugeldurchmesser DC1 aufweisen, der kleiner als oder gleich einem Kugeldurchmesser DC2 der Kugeln ist, welche die zweite Reihe von Laufkörpern (18) bilden.

6. Antriebsradanordnung (10) nach Anspruch 5, **dadurch gekennzeichnet, dass** der innere Laufring (36) eine in der Demontagerichtung (200) axial ausgerichtete Endfläche (57) vorweist und in einem Abstand L1 einer Ebene (PAB), welche die am weitesten von der Drehachse entfernten Punkte der ringförmigen Kontaktschnittstelle (58, 60) enthält, angeordnet ist, wobei der Abstand L1 kleiner als das Eineinhalbfache des Kugeldurchmessers DC1 der Kugeln (16) der ersten Reihe von Kugeln ist.

7. Antriebsradanordnung (10) nach einem der Ansprüche 5 bis 6, **dadurch gekennzeichnet, dass** der maximale Kontaktdurchmesser DA der ringförmigen Kontaktschnittstelle (58, 60) kleiner als die Summe aus dem zweifachen Durchmesser DC1 der Laufkörper (16) der ersten Reihe von Laufkörpern und dem Durchmesser DF des Schrumpfsitzes (52) ist.

8. Antriebsradanordnung (10) nach einem der vorstehenden Ansprüche, **dadurch gekennzeichnet, dass** sie ferner eine Getriebenuss (322) und laufende Getriebekörper (323) umfasst, wobei die laufenden Getriebekörper (323) durch Laufwege (461, 321) geführt werden, die in einem Hohlraum (50) der Getriebeschale (32) und auf der Getriebenuss(322) gebildet sind, wobei die Getriebenuss (322), die Laufkörper (323) und die Getriebeschale (32) ein Antriebsgelenk (320) bilden, das eine Grundebene (PPB) und einen Grunddurchmesser definiert.

9. Antriebsradanordnung nach Anspruch 8, **dadurch gekennzeichnet, dass** der maximale Kontaktdurchmesser DA der ringförmigen Kontaktschnittstelle (58, 60) kleiner als der Grunddurchmesser DPB des Antriebsgelenks ist.

10. Antriebsradanordnung nach einem der Ansprüche 8 bis 9, **dadurch gekennzeichnet, dass** die Grundebene (PPB) des Antriebsgelenks (320) in einem Abstand CA von der Montagereferenzebene (PA) angeordnet ist, der eine oder mehrere der folgenden Bedingungen erfüllt:

    - der Abstand CA ist kleiner als ein Grunddurchmesser (DP2) der zweiten Reihe von Laufkörpern (18);
    - der Abstand CA ist kleiner als dreizehn Siebtel eines axialen Abstands L2, gemessen zwischen der Montagereferenzebene (PA) und der zweiten Grundebene (PP2);
    - das Verhältnis zwischen einerseits dem Abstand CA und dem Abstand L zwischen der ersten Grundebene (PP1) und andererseits der zweiten Grundebene (PP2) ist kleiner als 4,75, vorzugsweise kleiner als 4,6;
    - das Verhältnis zwischen einerseits der Differenz zwischen dem Abstand CA und dem Abstand L2 zwischen der Montagereferenzebene (PA) und der zweiten Grundebene (PP2) und andererseits dem Grunddurchmesser DP2 der zweiten Reihe von Laufkörpern (18) ist kleiner als 0,45.

11. Antriebsradanordnung (10) nach einem der vorstehenden Ansprüche, **dadurch gekennzeichnet, dass** die ringförmige Kontaktschnittstelle (58, 60) eben ist.

12. Antriebsradanordnung (10) nach einem der vorstehenden Ansprüche, **dadurch gekennzeichnet, dass** die ringförmige Kontaktschnittstelle (58, 60) aufgeweitet, vorzugsweise kegelstumpfartig ist, und vorzugsweise einen Scheitelwinkel A vorweist, der eine oder mehrere der folgenden Bedingungen erfüllt:

    - der Scheitelwinkel A beträgt zwischen 100° und 140°;
    - der Scheitelwinkel A ist +/-10° gleich einem Scheitelwinkel B einer kegelstumpfartigen Innenfläche (61) der Getriebeschale (32), die der ringförmigen Anlagefläche (60) gegenüberliegt.

13. Antriebsradanordnung (10) nach einem der vorstehenden Ansprüche, **dadurch gekennzeichnet, dass** das Verhältnis zwischen dem maximalen Kontaktdurchmesser DA der ringförmigen Kontaktschnittstelle (58, 60) und dem Grunddurchmesser DP2 der zweiten Reihe von Laufkörpern (18) weniger als 0,65 beträgt.

14. Antriebsradanordnung (10) nach einem der vorstehenden Ansprüche, **dadurch gekennzeichnet, dass** die Getriebeschale (32) einen geriffelten Endabschnitt (46) umfasst, der lose, angepasst oder aufgeschrumpft in einem geriffelten rohrförmigen Abschnitt (47) der Radnabe (30) montiert ist, der eine geriffelte Kontaktschnittstelle bildet, wobei die rotierende Unterbaugruppe (14) vorzugsweise mindestens ein axiales Halteelement (80, 88) umfasst, das an der Getriebeschale (32) befestigt ist und direkt oder indirekt an einer axial in der Demontagerichtung (200) ausgerichtete Anschlagoberfläche (84) der Radnabe (30) anliegt.

15. Antriebsradanordnung (10) nach Anspruch 14, **dadurch gekennzeichnet, dass** die geriffelte Kontaktschnittstelle einen Riffelungsgrunddurchmesser DPC vorweist und die ringförmige Kontaktschnittstelle (58, 60) axial in einem Abstand LAB von der Montagereferenzebene PA so angeordnet ist, dass die Summe DPC + LAB kleiner als der Grunddurchmesser DP2 der zweiten Reihe von Laufkörpern ist.

16. Antriebsradanordnung (10) nach einem der Ansprüche 14 bis 15, **dadurch gekennzeichnet, dass** ein Abstand (LPC), der zwischen einem Ende der axial geriffelten Kontaktschnittstelle, welcher der ringförmigen Kontaktschnittstelle (58, 60) am nächsten liegt, gemessen wird, und der Montagebezugsebene (PA) weniger als vier Fünftel einer Länge L2 beträgt, gemessen zwischen der Montagereferenzebene (PA) und der zweiten Grundebene (PP2).

17. Antriebsradanordnung (10) nach einem der vorstehenden Ansprüche, **dadurch gekennzeichnet, dass** die Radnabe (30) ein massives, einteiliges Stück Metall ist.

18. Antriebsradanordnung (10) nach einem der vorstehenden Ansprüche, **dadurch gekennzeichnet, dass** die rotierende Unterbaugruppe (14) ferner eine Bremsscheibe (41) umfasst, die an der Montagefläche (42) anliegt, wobei eine Radfelge (40) an der Bremsscheibe (41) und Befestigungselementen (143) der Radfelge (40) und der Bremsscheibe (41) an dem Befestigungsflansch (38) anliegt.

**Claims**

1. A motor vehicle drive wheel assembly (10), comprising:

   - a fixed sub-assembly (12) comprising a first annular outer race (22) and a second annular outer race (24) centered on a common axis of revolution (100);
   - a rotating sub-assembly (14), able to rotate relative to the fixed subassembly (12) about the axis of revolution (100), and comprising a wheel hub (30) comprising a flange (38) provided with an interface for attaching a wheel rim (40) or a brake disc (41), the attachment flange (38) forming a face (42) for mounting the wheel rim (40) or the brake disc (41) turned axially in a direction of removal (200) of the wheel rim (40) or of the brake disc (41), the removal direction (200) being parallel to the axis of revolution (100), the mounting face (42) being tangential to a mounting reference plane (PA) perpendicular to the axis of revolution (100), a transmission bowl (32), and at least one inner bearing ring (36), the inner bearing ring (36) being shrink-fitted onto a shrink-fit surface (52) of the wheel hub, the inner bearing ring (36) being supported against the transmission bowl (32) at an annular contact interface (58, 60) extending at least in a radial direction relative to the axis of revolution (100), the rotating subassembly (14) further comprising a first inner race (56) located facing the first outer race (22) and a second inner race (62) located facing the second outer race (24) and formed on the inner bearing ring (36); and
   - rolling bodies (16, 18), forming a first row of rolling bodies (16) able to roll on the first outer race (22) and the first inner race (56) and a second row of rolling bodies (18) able to roll on the second outer race (24) and the second inner race (62), a first pitch plane (PP1) containing the centers of the rolling bodies (16) of the first row of rolling bodies being located at a non-zero distance L from a second pitch plane (PP2) containing the centers of the rolling bodies (18) of the second row of rolling bodies, in the removal direction (200), the first row of rolling bodies (16) and the second row of rolling bodies (18) being located on the same outer side of a boundary plane (PL) of the drive wheel assembly (10) tangent to the rolling bodies (18) of the second row of rolling bodies (18) and perpendicular to the axis of revolution (100);
   **characterized in that** the annular contact interface (58, 60) between the inner bearing ring (36) and the annular bearing face (60) of the transmission bowl (32) is positioned at least partially, and preferably completely, between the first pitch plane (PP1) and the boundary plane (PL) and has a maximum contact diameter DA that is greater than the diameter DF of the shrink-fit surface and less than a race bottom diameter D12 of the second inner race (62).

2. The drive wheel assembly (10) according to claim 1, **characterized in that** the annular contact interface (58, 60) between the inner bearing ring (36) and the annular bearing face (60) of the transmission bowl (32) is positioned at least partially, and preferably completely, between the first pitch plane (PP1) and the second pitch plane (PP2).

3. The drive wheel assembly (10) according to any one of the preceding claims, **characterized in that** the first outer race (22) has a race bottom diameter DE1 smaller than the race bottom diameter D12 of the second inner race (62).

4. The drive wheel assembly (10) according to any one of the preceding claims, **characterized in that** the transmission bowl (32) has a cavity (50) comprising ball-races (461), the ball-races (461) having a race bottom diameter DBO preferably satisfying one or more of the following conditions:

   - the race bottom diameter DBO is greater than a race bottom diameter DI1 of the first inner race (56),
   - the race bottom diameter DBO is less than the race bottom diameter D12 of the second inner race (62);
   - the race bottom diameter DBO is greater than the maximum contact diameter DA.

5. The drive wheel assembly (10) according to any one of the preceding claims, **characterized in that** the rolling bodies (16, 18) are balls, the balls forming the first row of rolling bodies (16) having a ball diameter DC1 of less than or equal to a diameter of balls DC2 of the balls forming the second row of rolling bodies (18).

6. The drive wheel assembly (10) according to claim 5, **characterized in that** the inner bearing ring (36) has an end face (57) turned axially in the removal direction (200), and located at a distance L1 from a plane (PAB) containing the points of the annular contact interface (58, 60) furthest from the axis of revolution, the distance L1 being less than one and a half times the ball diameter DC1 of the balls (16) of the first row of balls.

7. The drive wheel assembly (10) according to either one of claims 5 to 6, **characterized in that** the maximum contact diameter DA of the annular contact interface (58, 60) is less than the sum of twice the diameter DC1 of the rolling bodies (16) of the first row of rolling bodies and the diameter DF of the shrinkfitting surface (52).

8. The drive wheel assembly (10) according to any one of the preceding claims, **characterized in that** it further comprises a transmission nut (322) and transmission rolling bodies (323), the transmission rolling bodies (323) being guided by ball-races (461, 321) formed in a cavity (50) of the transmission bowl (32) and on the transmission nut (322), the transmission nut (322), the transmission rolling bodies (323) and the transmission bowl (32) forming a transmission joint (320) defining a pitch plane (PPB) and a pitch diameter.

9. The drive wheel assembly according to claim 8, **characterized in that** the maximum contact diameter DA of the annular contact interface (58, 60) is smaller than the pitch diameter DPB of the transmission joint.

10. The drive wheel assembly according to either one of claims 8 to 9, **characterized in that** the pitch plane (PPB) of the transmission joint (320) is located at a distance CA from the mounting reference plane (PA), which satisfies one or more of the following conditions:

    - the distance CA is less than a pitch diameter (DP2) of the second row of rolling bodies (18);
    - the distance CA is less than thirteen sevenths of an axial distance L2 measured between the mounting reference plane (PA) and the second pitch plane (PP2);
    - the ratio between the distance CA on the one hand, and the distance L between the first pitch plane (PP1) and the second pitch plane (PP2) on the other hand, is less than 4.75, preferably less than 4.6;
    - the ratio between on the one hand the difference between the distance CA and the distance L2 between the mounting reference plane (PA) and the second pitch plane (PP2) and, on the other hand, the pitch diameter DP2 of the second row of rolling bodies (18) is less than 0.45.

11. The drive wheel assembly (10) according to any one of the preceding claims, **characterized in that** the annular contact interface (58, 60) is planar.

12. The drive wheel assembly (10) according to any one of the preceding claims, **characterized in that** the annular contact interface (58, 60) is flared, preferably frustoconical, and, preferably, has an apex angle A satisfying one or more of the following conditions:

    - the apex angle A is between 100° and 140°;
    - the apex angle A is equal, within at least 10°, to an apex angle B of a frustoconical inner face (61) of the transmission bowl (32), opposite the annular bearing face (60).

13. The drive wheel assembly (10) according to any one of the preceding claims, **characterized in that** the ratio between the maximum contact diameter DA of the annular contact interface (58, 60) and the pitch diameter DP2 of the second rolling body row (18) less than 0.65.

14. The drive wheel assembly (10) according to any one of the preceding claims, **characterized in that** the transmission bowl (32) comprises a splined end portion (46) mounted free, fitted, or shrink-fitted in a splined tubular portion (47) of the wheel hub (30), forming a splined contact interface, the rotating sub-assembly (14) preferably comprising at least one axial holding element (80, 88) attached to the transmission bowl (32) and directly or indirectly bearing against an abutment surface (84) of the wheel hub (30) rotated axially in the removal direction (200).

15. The drive wheel assembly (10) according to claim 14, **characterized in that** the splined contact interface has a splined pitch diameter DPC and the annular contact interface (58, 60) is located axially at a distance LAB from the mounting reference plane PA, such that the sum DPC + LAB is less than the pitch diameter DP2 of the second row of rolling bodies.

16. The drive wheel assembly (10) according to either one of claims 14 to 15, **characterized in that** a distance (LPC) measured between one end of the splined contact interface axially closest to the annular contact interface (58, 60) and the mounting reference plane (PA) is less than four fifths of a length L2 measured between the mounting reference plane (PA) and the second pitch plane (PP2).

17. The drive wheel assembly (10) according to any one of the preceding claims, **characterized in that** the wheel hub (30) is a one-piece solid metal part.

18. The drive wheel assembly (10) according to any one of the preceding claims, **characterized in that** the rotating sub-assembly (14) further comprises a brake disc (41) supported on the mounting face (42), a wheel rim (40) supported on the brake disc (41) and the attachment elements (143) of the wheel rim (40) and the brake disc (41) to the attachment flange (38).

Fig. 1A

Fig. 1B

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102007016427 A1
- FR 3052104
- FR 3003201